# EUROPEAN PATENT APPLICATION

(11) **EP 4 826 333 A1**
(43) Date of publication of application: **21.10.2026**
(21) Application number: 25171092.7
(22) Date of filing: 16.04.2025
(51) Int. Cl.: G01C 15/00

(54) **AUTOMATED 3D WIREFRAME CREATION**

(71) Applicant: Leica Geosystems AG, 9435 Heerbrugg (CH)
(72) Inventor: SCHALK, Louis, 9000 St.Gallen (CH); BETKO, Peter, 9442 Berneck (CH); LARI, Zahra, Redmond, WA 98053 (US)
(74) Representative: Kaminski Harmann

(57) **Abstract**

A reality capturing method wherein using point cloud data (2, 2a, 2a', 2a'') and localization data (2b, T), a graphically visualizable 3D wireframe model (4) of a scanned environment (110) such as an indoor setting or a building is generated on-site. Thereby, planes (6, 6a, 6b, 6a', 6b', 6a'', 6b") are automatically derived from the point cloud data (2, 2a, 2a', 2a''), edges (8, 8a-c) are automatically derived from intersections of detected planes (6, 6a, 6b, 6a', 6b', 6a'', 6b'') and corners (9) automatically derived from intersections of detected edges (8, 8a-c).

## Description

The present invention relates generally to a method, device, system and computer program product for automatic wireframe generation according to the independent claims.

Accurate and efficient 3D modeling of indoor environments has become essential in fields like architecture and construction, where effective design, planning, and structural analysis rely on precise spatial data. To meet these needs, a range of technologies has been developed, each using point cloud and additional sensor data to generate detailed representations of indoor spaces. These solutions span from consumer-friendly applications that create basic floor plans to sophisticated, professional-grade systems for in-depth structural analysis.

By way of example, surveying of a building and surrounding terrain is of interest for architects or craftsmen in order to quickly assess an actual condition of a room or a construction progress of a building site, respectively, **e.g.** to efficiently plan the next work steps. By means of a digital visualization of the actual state, e.g. in the form of a point cloud or a vector file model, or by means of an augmented reality functionality, different options for further steps or expansion options can be examined and optionally presented to an employee or a customer in an easily accessible way.

An environment can be optically scanned and measured by means of a laser scanner emitting a laser measurement beam, **e.g.** using pulsed electromagnetic radiation, wherein an echo is received from a backscattering surface point of the environment and a distance to the surface point is derived and associated with an angular emission direction of the associated laser measurement beam. This way, a three-dimensional point cloud is generated. For example, the distance measurement may be based on the time of flight, the shape, and/or the phase of the pulse.

For additional information, the laser scanner data may be combined with camera data, in particular to provide high-resolution spectral information, e.g. by means of an RGB camera or an infrared camera.

Different data such as -images, LiDAR data and positioning data such as from a global navigation satellite system or Inertial Measurement Unit (IMU) can be referenced and fused, in particular in case of mobile reality capture devices. A reality capturing system may be configured to provide surveying data and referencing data at the same time, e.g. wherein at least trajectory data of the device, e.g. position and/or orientation data, are provided with the probing data, e.g. laser scanner data and if available also camera data, such that probing data of different positions of the reality capture device can be combined into a common coordinate system. Often, reality capture devices are configured to autonomously create a 3D map of a new environment, e.g. by means of a simultaneous localization and mapping (SLAM) functionality.

Typically, distance measuring modules used in surveying such as Electronic Distance Meters are designed solely for distance computation and do not capture intensity or color information. In contrast, laser scanners can detect intensity variations-representing the strength of the reflected laser signal-but still lack true color sensitivity. As a result, 3D models such as point clouds or vector files generated purely by laser scanners are typically displayed in grayscale. As a result, many details remain hidden to a human observer due to the lack of color effect and the lack of color-supported depth effect. Therefore, often a "colored" 3D point cloud is generated by means of referencing the "gray" 3D point cloud of the laser scanner with color data from one or more images, which makes the display much easier for the human eye.

However, still then, it may be difficult for a user to extract relevant information from such a visualized 3D point cloud, e.g., to identify (most) relevant structures of the scanned environment.

It is known in the art to analyze the 3D point cloud by means of a feature recognition algorithm for automatically recognizing and marking semantic and/or geometric features captured by the probing data using shape information provided by virtual object data from a Computer Aided Design (CAD) model. However, while such approaches can provide some additional help to user for data analysis, it still may be difficult for a user to recognize relevant information in a point cloud, in particular if the user is inexperienced, and above that, the need for pre-known data such as a CAD model is disadvantageous, in particular for in-the-field applications. Further, drawbacks of known machine learning (ML) methods are the need for huge datasets for training the feature recognition models, that such ML-algorithms only work on data similar to the data it has been trained on, and that the dimensional and positional accuracy of ML methods can be rather low.

It's therefore an object of the present invention to improve a reality capture system and method.

It is a further object to provide such a reality capture system and method which enables a visualization of key structures of a captured environment, in particular in-situ.

These objects are achieved by realizing the features of the independent claims. Features which further develop the invention in an alternative or advantageous manner are described in the dependent patent claims.

The present invention therefore relates to a wireframe generation method with a scanning device, which may be executed in the field on a control and evaluation computing unit of a reality capturing system having such a scanning device. The device can be embodied as a mobile scanning device to be carried and moved, e.g., by a mobile carrier such as a person, along a movement trajectory in an environment to be captured, e.g., an indoor environment such as a building or facility, during a measuring process for scanning the environment and generating a three dimensional digital representation of the environment.

Thereby, the scanning device is used for automatically generating 3D-point cloud data of the environment, for example in course of the movement of the device, with a device's laser scanner, for instance a time-of-flight laser scanner, having for example a solid-state ToF-sensor for gathering the scan data. Further, localization data of the scanning device is determined, for example in the form of a device's location with respect the scanned environment. In case of a mobile scanning, automatically determining localization data can comprise determining the movement trajectory of the mobile scanning device based on localization data provided by a localization unit of the mobile scanning device, which comprises an inertial measurement unit (IMU), for example. Thereby, as an option, simultaneous localization and mapping (SLAM) can be applied to generate a three-dimensional map of the environment by involving at least one of data of the IMU, image data from a camera unit of the scanning device for visual simultaneous localization and mapping (VSLAM), and/or LiDAR data for LiDAR-based simultaneous localization and mapping (LiDAR-SLAM).

The method further comprises automatically generating a graphically displayable or visualizable wireframe model of the scanned environment on-site. The term "wireframe" or "wireframe model" is to be understood as a skeletal 3D representation of a scene in which elements are represented by lines and vertices. This skeletal 3D representation can be viewed as a simplified model of the scanned scene, compared to a detailed point cloud 3D representation. The wireframe model is generated by evaluating said generated localization data and point cloud data, wherein planes are automatically detected within the point cloud data, whereby, optionally, normals of detected planes are automatically oriented based on the localization data. Further, edges are automatically detected based on a determination of intersections of detected planes and corners are automatically detected based on a determination of intersections of detected edges. Thereby, for example a first person visualization of the wireframe model, **e.g.,** as an augmented reality visualization, can be provided.

The method comprises a generation of the wireframe model on-the-fly by real-time evaluation of localization data and point cloud data. For example, the method comprises a seamless incremental wireframe generation along a movement trajectory in course of a measuring or reality capturing process. The wireframe model can also be generated parallel to a generation of a point cloud, in particular providing a parallel graphical visualization of the wireframe model and the point cloud on a user display, for example as an overlay of the wireframe model onto the point cloud representation. As another option, at least some steps of the method may also be part of a post-processing.

As a further option, the method comprises detecting geometric planes or planar regions by analysis of the point cloud using a region-growing approach.

As a further option, the method comprises an alignment or orienting of the normals of such detected planes taking the movement trajectory into account. For example, the side of the planes facing a room interior is identified in view of the movement trajectory. Localization data such as a device trajectory information or a scanner position/orientation during scanning can then be used to flip the plane normal to make it point towards the scanning position, thus storing information about the side of the plane facing the scanner.

Optionally, the method comprises refining of the wireframe model on-the-fly by merging subsequently detected planes, thereby reducing the total number of planes and preventing redundancy in the detected features. Such merging is based on predefined thresholds including an overlap threshold, threshold of angle between normals of candidate plane pairs and plane distance threshold. Additionally, there is a refining of the wireframe model on-the-fly by discarding detected planes below a minimum plane size threshold and/or a threshold referring to the minimum number of points of a plane. Discarding small planes also allows to focus on main structural planes in the point cloud and not include smaller less significant planes in the wireframe model.

As further option, the method comprises using detected corners as vertices of the wireframe model. As another option, for example there is a detection of hidden edges by extrapolation of planes.

The method can further comprise verifying detected edges by evaluating the orientation of normals of underlying planes and/or the scan point densities of the underlying planes.

As a further option, the method comprises detecting the global orientation of the environment such as a building orientation, by clustering the normals of detected planes into three orthonormal groups, for example using a k-medians clustering algorithm.

As another option, the method comprises detecting openings of the structural environmental elements -if present- based on a, particularly two dimensional, scan point density map. Therein, for determining an opening boundary a scan point density threshold is considered and/or predefined geometric shapes such as rectangles or circles are fitted.

As yet still another option, the method comprises detecting staircases -if present in the environment. In the case of such a staircase search a potential staircase location is determined based on the localization data, e.g. movement trajectory and/or using an image captured by a device's camera. Furthermore, for staircase detection, there is a focus on point clouds aggregated along the movement trajectory or from different scan stations, as they capture smaller planes that would typically be omitted in lower-density single scans. By analyzing the aggregated point cloud data, a staircase wireframe is generated based on predefined geometric features **(i.e.,** their shape and placement relative to the trajectory). Specifically, the approach emphasizes identifying successive planes with gradual elevation changes, which characterize the step-by-step ascent or descent of the staircase. Such an algorithm can comprise a detection of constant elevation/height changes and/or of planes orthogonal to each other.

Optionally, the scanning device comprises a camera unit having multiple distributed localization or SLAM-cameras and/or a panoramic camera and the method comprises capturing images of the environment, **e.g.** during the movement of the scanning device, classifying of imaged objects and/or regions, for example using a neural network, and using the classification results for identifying structural environmental objects such as walls, floors, ceilings, doors, windows and/or stairs. Hence, the method can comprise machine learned classification of image data of the environment captured during the measuring process.

As an option, the method comprises determining a scan movement trajectory with six degrees of freedom (six-DoF), involving the position and orientation of a mobile scanning device.

As another option, the method comprises setting a data acquisition mode for generating the point cloud data as a function of a movement parameter of a mobile scanning device, with the movement parameter being determined using the localization data.

As still another option, the method comprises identifying and visually marking critical structural elements based on stored environmental data such as a Building Information Model.

The present invention also relates to a computer program product, which includes computer-executable instructions for performing the automatic execution of the automatic steps of the method as claimed, in particular when the computer program product is executed on a control and evaluation computer of a reality capturing system comprising a scanning device as claimed.

The present invention offers the advantage of an in-situ wireframe generation of, in particular indoor, environments with a handheld laser scanner as an exemplary reality capturing device. The invention provides a highly efficient wireframe generation method tailored for professional applications requiring accurate structural models.

The proposed wireframe generation process is designed to generate a model that provides a foundational, basic or plain 3D representation of indoor or other environments in form of a 3D-wireframe model, capturing essential structural and spatial elements. This process can rely exclusively on point cloud data captured in real-time by the laser scanner and its trajectory data, producing a dimensionally and positionally accurate skeletal framework of a building's architectural features during the scan. This wireframe model provides a simplified yet precise depiction of an environment such as a building's geometry and spatial layout, suitable for initial stages in architectural design, construction planning, and structural assessment. Unlike fully detailed models, this wireframe serves as an efficient preliminary visualization, with the potential for further refinement if necessary.

Particularly, the invention can provide a real-time wireframe visualization. The invention emphasizes immediate feedback, allowing users to view an evolving 3D wireframe model in real-time as the scanner captures data. By processing data continuously during scans, the invention provides users with an immediate, intuitive visualization of the scanned space's structure. This feature enables users to monitor the coverage and quality of the scan in real-time, a significant improvement over slower, batch-based methods.

This step-by-step accumulation enables the wireframe to develop progressively, giving users an up-to-date representation of the environment as scanning continues. The visualization unit receives each update, visualizing the evolving wireframe so users can interact with and monitor the structural outline of the scanned space in real time. This process provides a continuous, accurate spatial framework that grows with the data, capturing the essential layout and structural details of the environment.

Further, the invention can provide a structural element detection. The wireframe generation process can autonomously identify and represent critical structural features, such as walls, floors, and ceilings, without requiring pre-existing layout data or external reference points. This approach offers high degree of adaptability, allowing for efficient modeling of varied architectural environments.

The proposed approach can identify openings, such as doors and windows, by analyzing density variations in the point cloud data itself. This is achieved through a plane projection and pixelization process in which a density map of the detected planes is created, and low-density regions indicate potential openings. This technique enables real-time, precise opening detection based purely on the geometric characteristics of the scanned environment, allowing the model to adapt to unique, non-standard, or irregular openings without prior assumptions.

The invention's streamlined algorithm can provide an efficient solution for converting large-scale point clouds into a skeletal wireframe model without extensive computation. Unlike for instance deep learning-based systems which require significant resources, the present invention achieves real-time processing on handheld hardware, making it suitable for both small-scale rooms and expansive indoor spaces.

The proposed wireframe algorithm focuses on structural fidelity and simplified geometry, ensuring that only essential architectural features are represented. This approach circumvents the need for pre-existing models or complex training data. The wireframe generation functionality can be executed without any pre-knowledge about the environment. Generation of the wireframe model can be based solely on geometric information derived from the digital representation generated from the point cloud data and using the localization data. Thus, the digital representation is aligned within a unified coordinate system.

By leveraging only point cloud data, the process ensures high accuracy and fidelity in capturing spatial dimensions, making it a valuable tool for integrating initial measurements into digital workflows. In the proposed wireframe generation method, accurate detection of walls, floors, ceilings, and other structural elements can be entirely based on analyzing geometric relationships within the 3D point cloud. By identifying planes, edges, and corners directly from point cloud data through spatial consistency and proximity analysis, this approach achieves high accuracy in structural detection without relying on predefined layouts or assumptions.

The method brings significant advancements in wireframe generation, delivering enhanced accuracy and usability. By incorporating approaches such as camera-assisted object recognition and real-time integrity analysis, this solution becomes increasingly adaptable to a wide range of applications. From architectural design and interior planning to safety analysis and facility management, these improvements enable the proposed wireframe generation process to meet the unique demands of various industries. Together, they provide a robust, flexible toolset for professionals seeking precise, reliable spatial representations, regardless of the environment's complexity. The algorithm adapts to various environments, handling different scales and complexities, from small rooms to large indoor spaces, spanning multiple rooms and floors.

Systems, methods and setups according to the invention are described or explained in more detail below, purely by way of example, with reference to working examples shown schematically in the drawing. The diagrams of the figures should not be considered as being drawn to scale. Where appropriate, the same reference signs are used for the same features or for features with similar functionalities. Different indices to reference signs are used to differentiate between different embodiments of the same or an equivalent feature that is shown exemplarily. The term "substantially" is herein used to describe the fact that a certain value, arrangement or feature does not necessarily need to be 100% exact, but can maybe slightly deviate, while still being within scope.

Specifically,
- Fig. 1: shows an exemplary application of a mobile reality capture device;
- Fig. 2: indicates schematically a basic workflow of a method for automatically providing a wireframe model to a user in the field;
- Fig. 3: shows a flowchart of an example of the automatic wireframe 3D generation and wireframe creation;
- Fig. 4: illustrates schematically an example of an automatic 3D-plane detection;
- Fig. 5: illustrates schematically an example of automatic 3D-plane merging;
- Figs. 6a,b: show schematically examples of an automatic detection of edges;
- Figs. 7a-d: show schematically an example of an automatic detection of corners;
- Figs. 8a-e: show schematically an example of an automatic detection of openings; and
- Figs. 9a-c: illustrate schemes of generated wireframe models.

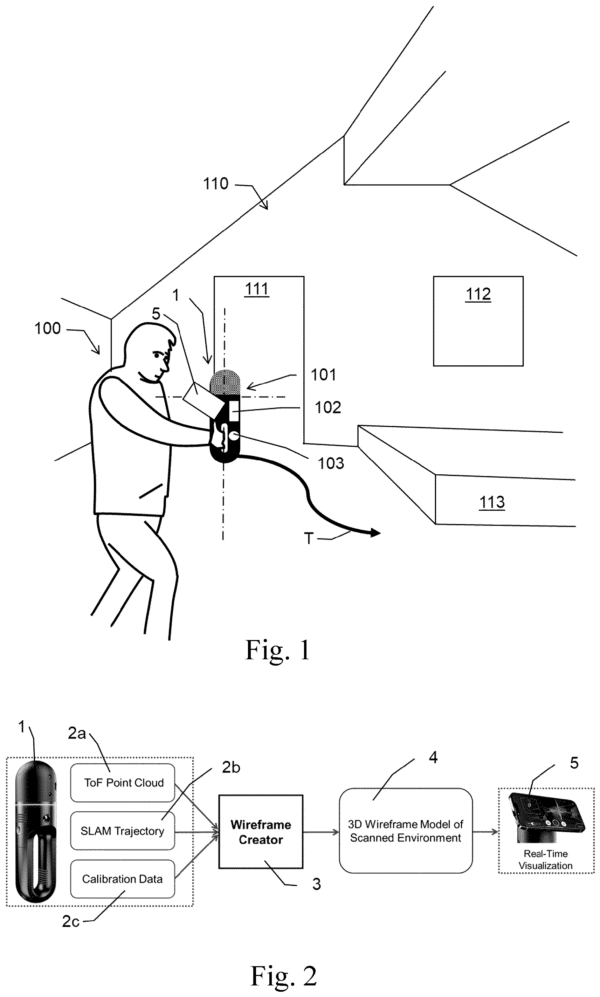

**Fig.** 1 shows an exemplary application of the reality capture device 1, here in the field of architecture or real estate, e.g. where a user 100 such as an architect or a potential homebuyer would like to have a digital 2D- or 3D-representation of an environment 110 such as a room or an entire building for providing improved visualization of details or potential extension plans.

The reality capture device 1 -which in this example is embodied as a mobile device- comprises a localization unit 102, e.g. for the purposes of providing a simultaneous localization and mapping functionality, a laser scanner 101, and in the example a camera unit 103 with for example three high-resolution cameras, wherein the exemplary mobile reality capture device 1 is configured as a handheld device to be carried by a user 100 through the room 110, but could also be moved by a mobile carrier such as a robotic or remote-controlled platform. The room 110 is surveyed during the movement along a movement trajectory T of the mobile reality capture device 1, wherein the data from the laser scanner 101 and the camera unit 103 are referenced to each other by means of the localization unit 102, e.g. within the scope of a SLAM functionality that outputs the trajectory T (position and orientation, six-DoF). The trajectory T is used to align the point cloud in a unified unique coordinate system.

Localization data can also be provided by position and/or orientation means such as an Inertial Measurement Unit (IMU) to track movement and orientation for accurate 3D mapping in real time, which IMU data can be used as an input for a SLAM-algorithm. This reduces drift, maintains point cloud stability, and enables high-quality mapping, even in dynamic indoor environments. Such an IMU can measure accelerations, angular rates and optionally the magnetic field. Alternatively or additionally, the device 1 can comprise single angular sensors and/or inclination sensors or accelerometers (e.g. a 3-axis MEMS accelerometer) and/or a magnetometer and/or a gyroscope.

Because of the movement of the device 1 by user 100, objects 113 or structural elements such as a door 111 or window 112 and spatial areas of the environment 110 can be measured from different angles, as a result of which, shadowing and/or dead angles can be avoided. If acquiring a point cloud using a stationary laser scanner instead, different stations or scan locations might be needed.

The mobile or stationary laser scanner 101 is configured to scan room 110 by means of laser measurement. For example, the laser scanner 101 comprises two solid-state time-of-flight (ToF) sensors. These sensors emit laser pulses to measure distances to surrounding surfaces of the environment 110, capturing spatial data multiple times per second and feeding it directly into a processing pipeline for generating a digital representation of the environment 110, for example in form of a 3D-point cloud. Other known laser scanners move a laser beam relative to two rotation axes, e.g. a vertical axis of rotation 3, often referred to as the "slow" axis or azimuth axis, and a rotation axis 4 perpendicular thereto, often also referred to as the "fast" axis or elevation axis. By way of example, a desired point-to-point resolution is adjustable by adjusting the laser pulse rate and/or by adjusting the rotational speed of the laser measurement beam about the two rotation axes.

As already mentioned, by way of example, the camera unit 103 comprises one or multiple cameras such as one or multiple color/RGB-cameras, e.g. for colorizing a three-dimensional point cloud, one or multiple high resolution cameras, e.g. for providing a high-resolution detail image. RGB images captured by the cameras can be mapped directly onto the point cloud in real-time, assigning color to each point and resulting in a continuously updated, colorized digital representation.

The mobile reality capture device 1 may further include other sensors or have additional auxiliary device interfaces, **e.g.** an interface for attaching a GNSS receiver or a display 5 as shown. The reality capture device 1 may be additionally provided with a unit such as a global satellite navigation system transceiver or a compass, e.g. for referencing the data of the mobile reality capture device with a global coordinate system.

Further, the mobile reality capture device 1 preferably is configured to communicate with an external processing unit of a companion device or any other processing and visualization unit 5, **e.g.** a tablet or smartphone, which is configured to process at least parts of the measurement data of the reality capture device 1, e.g. for referencing the camera 103 data with the laser scanner data or for providing a Human-Machine-Interface (HMI), in particular extended display functionality.

In particular, the reality capture device 1 is configured to transmit measurement data to the external processing unit by means of a data streaming started simultaneously or in real-time relative to the measurement process, e.g. via WLAN or Bluetooth connection, so that the processing of the acquired data on the external processing unit can take place essentially parallel to the data acquisition. For example, this way the measurement data can be displayed continuously for user 100 as a continuously growing colored 3D point cloud, e.g. by means of a display 5 coupled to the mobile reality capture device 1. Through the HMI, user 100 can e.g. adjust settings, view the developing colorized 3D model, and manage data exports.

By way of example, the localization unit 102 is configured to determine the trajectory T of the mobile reality capture device 1 with six degrees of freedom, i.e. involving position and orientation (pose) of the mobile reality capture device 1. In particular, the mobile reality capture device 1 may be configured for simultaneous localization and mapping (SLAM) to generate a three-dimensional map by involving at least one of data of an inertial measurement unit (IMU-SLAM), image data of the cameras for visual SLAM (VSLAM), and/or light detection and ranging (LiDAR) data of the laser scanner for LiDAR based SLAM (LiDAR-SLAM).

Combining LiDAR SLAM, visual SLAM, and an inertial measurement unit (IMU) in a multi-sensor fusion system integrates data from cameras 103, the IMU, and LiDAR sensors 101 to track movement along trajectory T and build precise 3D models on the **go.** Visual SLAM uses camera data to identify and track landmarks, while the IMU provides acceleration and rotational data to stabilize and refine positioning, even in low-visibility or rapid-motion scenarios. The LiDAR sensor adds depth information, ensuring accurate environmental mapping. Visual landmarks can be tracked across frames, and an algorithm can be applied to determine relative pose. The IMU data, through gyroscope and accelerometer inputs, provides both scale and relative pose to the starting point, thereby accurately positioning this digital representation within the environment. This ensures its readiness for real-time mapping.

Thus, point cloud data from the scanner 101 is continuously aligned and consolidated to form a high-density 3D point cloud that accurately represents the spatial geometry of the scanned environment as it is acquired. Hence, as device 1 captures data, for example an integrator mobile application can display the already accumulated and accumulating point cloud, thus enabling user 100 to monitor the measuring procedure.

As such a 3D-point cloud contains a huge amount of information which might overwhelm user 100 or might be too detailed for some purposes, a reality capturing system and method are proposed that enable user 100 to view a structural overview of the scan environment 110 on-site in form of a wireframe model, as exemplified below.

Fig. 2 indicates schematically the basic concept/workflow of a method for providing a wireframe model to a user in the field, using a reality capturing system with a scanning device as exemplified above.

As principally described above, the laser scanning device 1, e.g. using a ToF-sensor, gathers point cloud data 2a, for example provided in form of a point cloud whilst being moved along a movement trajectory through the environment. Such a movement is sensed, for example, in the form of a SLAM trajectory.

These point cloud data and movement data -or more generally speaking localization data- are fed, in the example together with calibration data 2c of the device, into a wireframe creator 3. The wireframe creator 3 generates a 3D wireframe model 4 of the scanned environment.

The generated wireframe model 4 is outputted and is, for example, wirelessly transmitted to a display unit such as an external electronic device 5 as mentioned above, e.g. a smartphone connected to the scanning device 1 as depicted.

Hence, a wireframe creator 3 can continuously receive point cloud data 2a, localization data such as trajectory data 2b and sensors' calibration information 2c from the scanner and can process this data instantly to produce a 3D wireframe model 4. This wireframe 4 can be sent to a visualization device 5 for immediate visualization.

The computer unit 5 can also serve as a hub for transmitting data from the scanning device 1 to the wireframe creator or can host the wireframe creator, e.g. hosting a wireframe generation software/program. In other words, the wireframe can be calculated on different computers of the system, e.g., on a processing unit of the data capture device 1 and/or on the companion device 5.

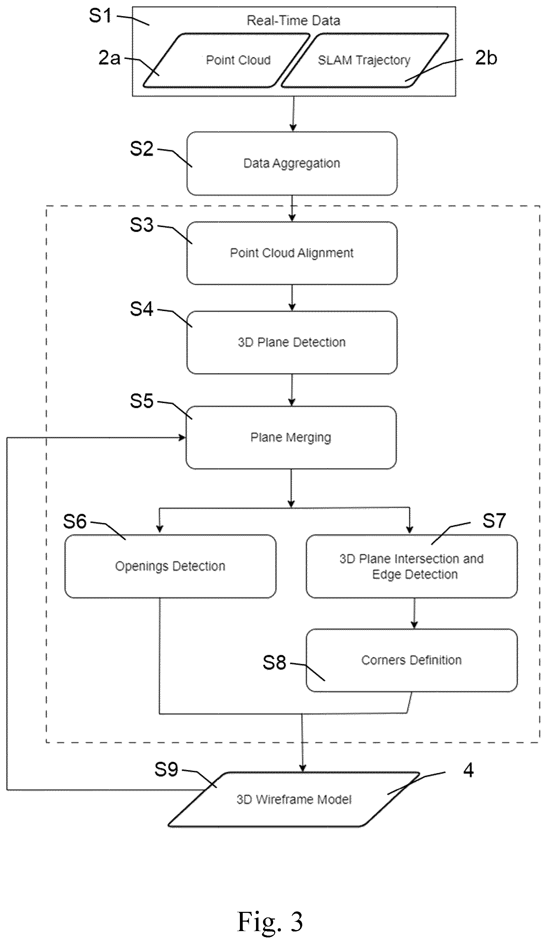

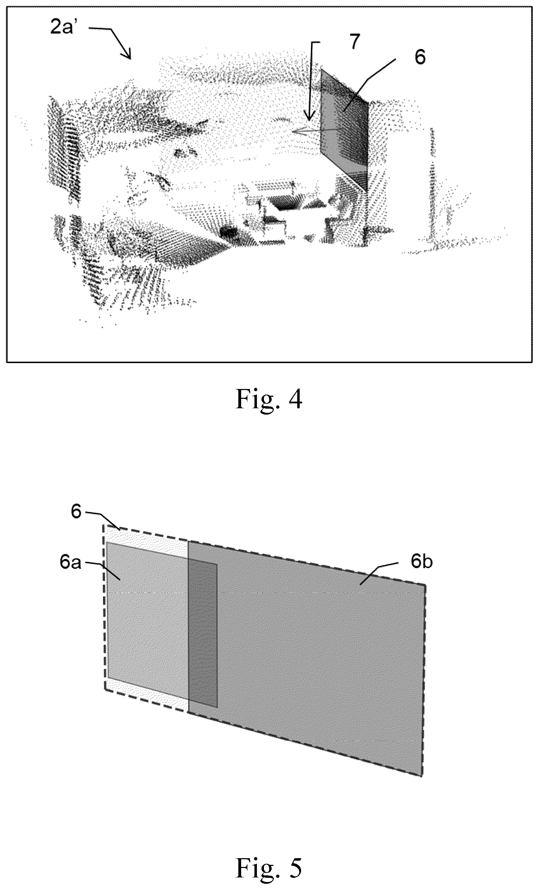

Fig. 3 shows a flowchart of an example of the automatic method as implementable by a wireframe generation algorithm in more detail, where the following description also refers to figures 4-9, too, which further illustrate method steps S4-S9 of figure 3.

In the first step S1, real-time sensed point coordinate data and localization data are acquired by the scanning device, here in form of (ToF) point cloud data 2a and a SLAM trajectory 2b. The data from the Time-of-Flight (ToF) sensors is initially gathered for example over a brief period of less than one second.

This data is aggregated (step S2). Precise values of sensor device's position and orientation are obtained, allowing for accurate alignment of the captured point cloud within a unified coordinate system (step S3).

The alignment step (S3) provides consistent point cloud data as it transforms the local point cloud data into a common frame of reference. Once aligned, the local point cloud can undergo further processing, serving as the input for the core or central wireframe generation procedure, i.e. steps S4-S8.

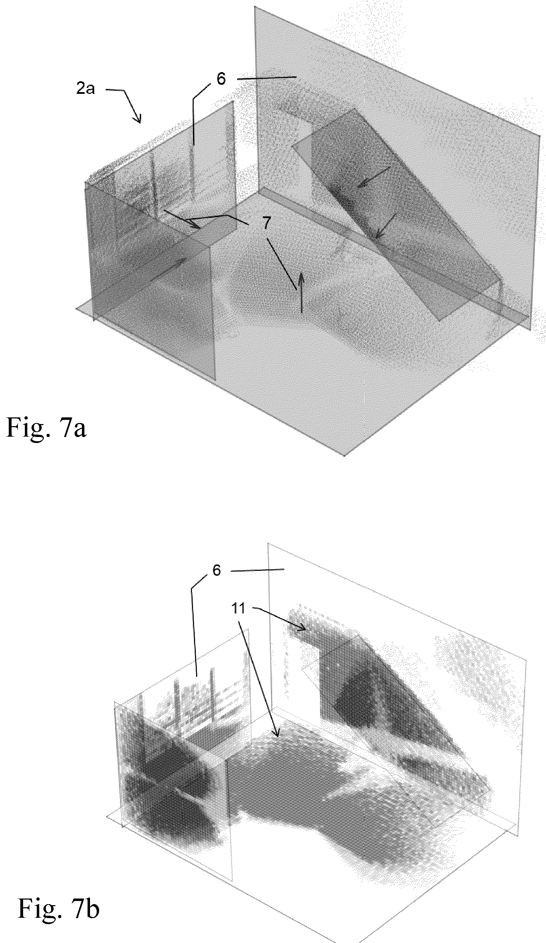

In step S4, which is further described with reference to **Fig. 4** **and** **Fig. 7a****,** planes 6 within the aggregated and aligned point cloud data 2a' are detected. This initial step S4 in wireframe creation involves for example identifying primary structural elements within the aggregated and aligned point cloud 2a', namely planes, which can represent or signify walls, floors, and ceilings or other primary objects (such as exemplary objects 111-113 of figure 1).

According to step 4, first, local surface normals are calculated using Principal Component Analysis (PCA). Thereby, a region-growing algorithm is used based on the geometry of the point cloud. For example, a region growing algorithm can include the following steps: the point cloud is voxelized, and voxels are first checked for planarity. The ones satisfying a planarity condition are selected. Then, those seed voxels are expanded with neighboring voxels if they satisfy some distance and planarity criteria, ensuring the formation of cohesive, flat surfaces 6. Finally, a merging strategy is used to merge adjacent detected planar regions.

Once a plane-like region is identified, a plane center and orientation and/or the plane equation are derived from the previously computed point normals and 3D coordinates

The plane's extents are determined by the positions of its associated 3D points, and a bounding rectangle is defined to indicate the plane region as a property of the plane that allows to define intersections and merges.

Utilizing localization data of the device such as SLAM trajectory information, the plane normals 7 are oriented, in particular oriented to point towards the scanner position, to face the scanner. If the building orientation is known, the plane bounding rectangle can be rotated around the plane normal 7 to align with the building's structure.

The orientation of an scanned building can be determined (in a step not depicted in the figure) for example based on the fact that most modern buildings have straight, perpendicular walls aligned along two main directions. An orientation detection can be applied during the scanning phase once a sufficient number of planes or plane normals have been gathered, which number might depend on plane properties such as size or relative angle, e.g., the minimum number for example being 100 planes.

After a brief period of data capture, a sufficient number of planes are identified within the point clouds. Once this threshold is reached, a building orientation detection algorithm is triggered.

This algorithm uses the normals 7 of the detected planes 6, clustering them into three groups using a k-medians clustering algorithm. The medians of these clusters provide an initial estimate of the building's orientation. These three 3D vectors are then adjusted to ensure orthonormality, accurately defining the **x,** y, and z directional axes of the building.

Referring again to step S4 of plane detection, as a measure, minor or irregular planes are discarded, while significant structural planes are retained to form the foundation of the wireframe model. This process distills the environment into essential planes 6, creating a structural outline that serves as the framework for the wireframe model.

In step S5, which is described with reference to Fig. 5, too, the detected planes 6a, 6b are merged. The planes 6a, 6b identified in the local point cloud capture the structure of the scanned environment, reflecting its spatial characteristics.

One of the two planes is detected in the latest point cloud (for example 6b), the other one 6a has been detected earlier. When planes 6b are detected in a local point cloud, these new planes are compared to old planes 6a (planes that were detected and maybe also merged in previous steps). If similarity is found between an old and a new plane, they are merged into a single one.

Hence, in this exemplary workflow, in order to refine the model, each new plane, here plane 6b is systematically compared with previously detected planes, here plane 6a. If the two planes 6a, 6b demonstrate sufficient similarity - evident through criteria such as spatial overlap, comparable orientation, and close 3D position - they are consolidated into a single, unified plane 6 (indicated in figure 5 by the dashed frame).

This plane merging process enables efficient storage and updating of structural planes 6a, 6b, allowing the system to continuously detect new architectural features and refine the wireframe model. By reducing redundancy, this strategy maintains a streamlined set of wireframe elements, enhancing the model's efficiency and preserving computational resources.

As an additional step (not shown in figure 3) a density map 11 of each plane can be determined as depicted in a 3D-scheme in **Fig. 7b****.** At first, each 2D plane 6 is subdivided into small, pixel-like square regions. As new scan points are detected on a plane 6, each point's 2D position is mapped to its corresponding "pixel", incrementing its value. This generates a density map 11 for each plane 6.

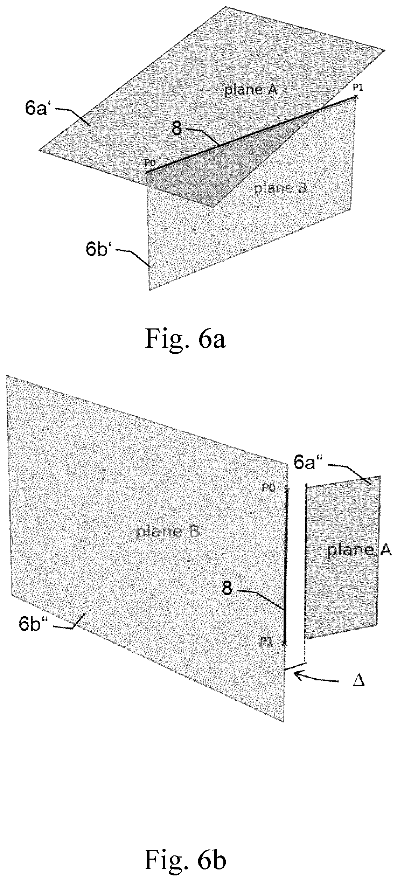

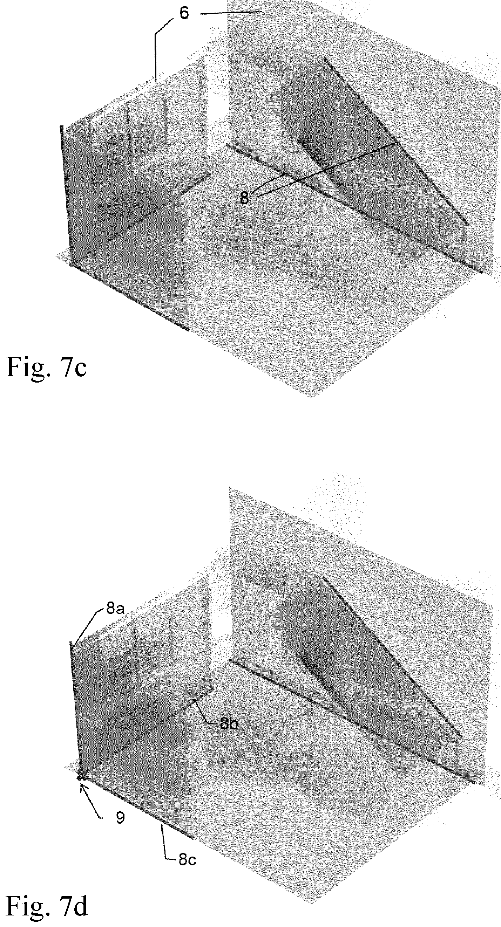

Now referring to step S7 of figure 3 and also to **Figs. 6a, 6b** and **7c****,** there is illustrated a step of edge detection for constructing the building's physical geometry and representing its structure.

After identifying primary planes 6, 6a', 6b' within the point cloud - which can represent walls, floors, and ceilings as already mentioned - their intersections are calculated to obtain edges 8 which reveal physical edges within the environment/building (see in particular figure 6a).

In 3D space, the intersection of two planes forms a line 8 that represents a physical edge, such as where a wall meets the floor or ceiling. By detecting and mapping these intersecting lines 8, one can delineate the boundaries of structural elements and establish a framework outlining the building's geometry.

This systematic identification of plane intersections allows for the reconstruction of the essential structure of the environment. The resulting 3D wireframe captures these key architectural edges 8, providing a simplified yet precise representation of the spatial layout of the scanned environment.

As indicated in figure 6b, gaps Δ between detected planes 6a", 6b'' can be present. This can be caused e.g. in those complex environments with occlusions - such as cluttered spaces or areas with obstructed views - where data gaps in the point cloud are present.

This problem is handled by setting thresholds that allow edges to form between two detected planes, even if they don't intersect precisely. If there is a gap Δ between the bounding rectangles of the planes 6a'', 6b", an intersection may still be determined if the gap Δ is below said threshold, and a wireframe edge 8 can be created based on the set threshold.

Such a threshold can be predefined or fixed and/or can be automatically or manually adapted, for example based on some sort of automatic and/or human classification of the environment. For example, more permissive thresholds can be applied in occluded environments, especially those with abundant furniture, thus enabling the detection of hidden edges and thereby improving the completeness of the wireframe.

Another challenge is that wireframe edges 8 generated by plane intersections can be false positives that do not represent actual structural elements. This issue can arise in complex multi-room or multi-floor scenarios where a large number of planes are detected, leading to instances where two planes 6a', 6b' may appear to intersect even though they do not.

As a solution, two strategies are used: first, potential edges 8 are evaluated based on the orientation of plane normals (7 in figures 4 and 7a). If their orientations suggest no genuine intersection, the edge 8 is rejected. Second, after an edge 8 is created, point densities on both planes 6a', 6b' near the edge 8 are analyzed as criteria to confirm its validity. For example, if there is a change in point density at the potential edge 8 within a defined range of thresholds, it serves as a confirmation. - These strategies together ensure that only true structural edges 8 are retained, enhancing wireframe accuracy in complex environments.

Now referring to step S8 of figure 3 and also to Fig. 7d. Using edges 8a, 8b, 8c detected in step S7, this next step S8 in the wireframe creation procedure defines corners 9. Therefore, intersections of three edge lines 8a, 8b, 8c within the 3D space are identified. Thus, after the primary planes are defined and their intersections calculated to form edges 8a, 8b, 8c, points where three of these intersecting edge lines meet are searched. Such an edge intersection represents a structural corner 9 in the environment, such as the junctions where two walls meet a floor or ceiling.

These corner points 9 store essential information about the geometry of the building. They are an essential part of the wireframe as they constrain and link line segments together (the positions of the corner points 9 themselves have not to be fixed but can be continuously updated, too). Each corner point 9 functions as a vertex and is used as a precise reference, thereby reinforcing spatial relationships among structural elements. This process not only completes the foundational framework of the wireframe but also provides a more detailed, unified representation of the building's 3D structure.

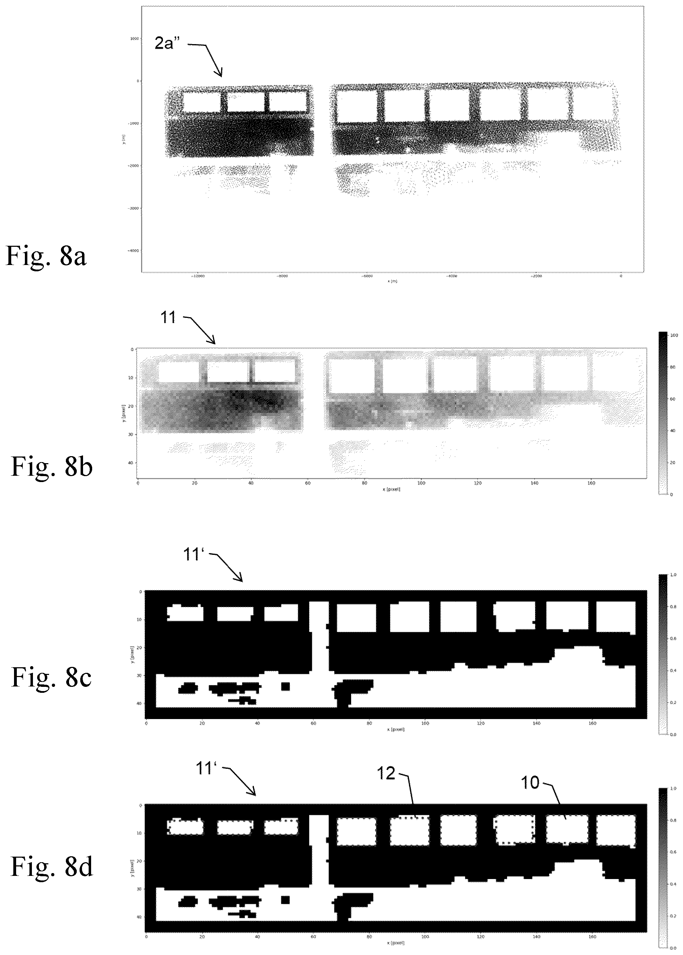

Next, step S6, which is described with reference to **Figs. 8a-****8e** as well, refers to an automatic detection of openings or gaps of the environment, for example doors and windows, in the collected data for representation in the wireframe model. This method step S6 enables real-time detection and representation of structural openings 10 based on data from a point cloud 2a. Knowledge about such structural openings adds essential architectural details that enhance the spatial accuracy and utility of the 3D wireframe model.

At first, each 2D plane of a point cloud 2a'' (figure 8a) is subdivided into small, pixel-like square regions. As new scan points are detected on a plane, each point's 2D position is mapped to its corresponding "pixel", incrementing its value. This generates a density map 11 for each plane as schematically shown in Fig. 8b.

The original density map 11 is then transformed into a binary density map 11' using a threshold. For example, all pixels having a value above a threshold are mapped to a value of 1, while other pixels are mapped to a value of 0, as schematically indicated in figure 8c. The threshold helps mitigate noise in the 2D map. Gaussian blurring can also be applied to further reduce noise.

As schematically indicated in figure 8d, within the binary density map 11', empty regions 10 can be identified using a contour detection algorithm.

To verify conformity to a defined geometry, in particular the rectangularity of these regions, exterior bounding shapes such as a rectangle 12 are applied as well as largest interior rectangle algorithms to the identified contours. Then, their areas are compared to one another and to the initial contour area to detect rectangular-shaped empty regions.

For precise positioning, the proposed algorithm further refines the detected openings 10 by subdividing the plane into even smaller pixels. This higher-resolution density map allows more accurate positioning of the openings. Starting from the interior rectangle's position, the opening size is incrementally expanded in each direction until a predefined point density is reached, ensuring precise boundary determination. This process is repeated in all four directions to finalize the opening's dimensions.

The pixelated 2D regions are then projected onto a metric 2D space to identify the boundary points of detected openings 10, allowing for precise delineation of each opening's shape 12 (in the figure indicated by dashed lines).

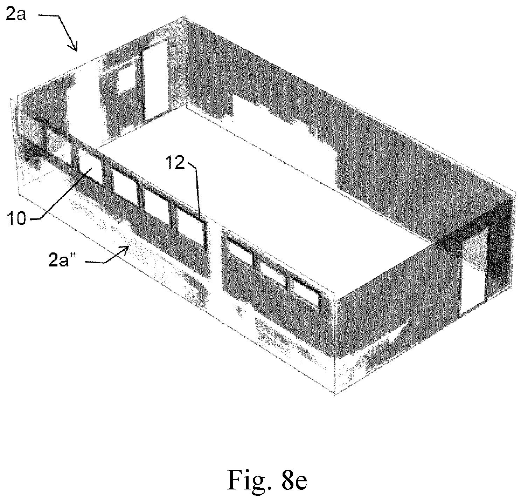

As indicated in figure 8e, these boundaries 12 are then reprojected into 3D space 2a, accurately mapping the edges of each opening 10 onto the original plane 2a'.

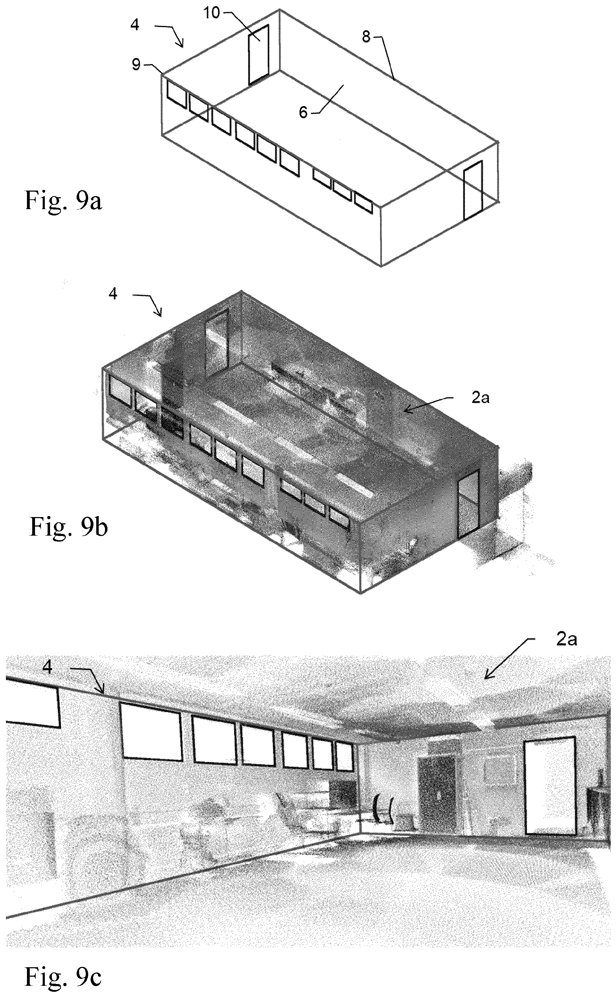

Finally, at step S9 of figure 3, a wireframe model 4 is outputted as illustrated schematically in **Figs. 9a****-c** by the thick black lines which represent the "assembled" edges 8 and corners 9, generated as described above.

Figure 9a shows a scheme of such a 3D-wireframe model 4 alone and figures 9b and 9c as an overlay on the underlying 3D-point cloud 2. Thus, figures 9a and 9b show a 3D-top-view of the captured floor as may be shown to a user on a display, whereas figure 9c depicts a first person view of the environment as another example of a visualization of the generated wireframe **4.**

A special challenge, particularly with regard to plane detection, respectively selection of valid or relevant planes and discarding other ones, are staircases. Staircases present unique challenges due to their repetitive, small, multiplanar structure and varying depths. Individual stair planes are small and the local point cloud is often sparse.

To address this and ensure that stairs as essential architectural details are accurately represented within the 3D model, there can be a first step to identify potential staircases wherein camera images and object recognition ML algorithms can be used. Another exemplary approach of staircase identification comprises monitoring for significant altitude changes in the scanning device's trajectory (T in figure 1), storing point clouds gathered during these periods. After completing the scan, the point clouds gathered during altitude changes are retrieved, forming a larger, denser dataset of accumulated data, for example for a specific time length such as several minutes or a specific position interval/region.

A plane detection algorithm is then applied specifically to this dataset, e.g., as an additional step, for instance at the end of the exemplified workflow or after a basic wireframe model has been generated. The planes 6 detected thereby are then filtered to retain only those whose shape and position are consistent with predefined stair geometry. Once verified, plane intersection and corner detection steps as described above are performed to create the staircase wireframe. Thus, plane detection parameters can be adjusted or differentiated as well as any intersection thresholds.

Detection of structural elements 6 may be supported or facilitated utilizing camera images of the environment, for example captured by a camera unit of the scanning device, if available. In particular, such images can be fed into an image-based semantic segmentation neural network (NN) to classify different regions of the environment within captured images. The neural network identifies objects such as walls, windows, and furniture, assigning each a category. This classification is then projected onto the point cloud 2a, enabling the system to differentiate structural elements from non-structural ones. By filtering out non-structural items like furniture using camera images, this approach improves wireframe accuracy in cluttered environments. It also can support detection of complex features like stairs, enhancing structural detail and clarity within the wireframe. However, it is noted that this is only an option which may be applied for further improvement or in case of special settings; the proposed method relies basically on pure point cloud data processing (aggregated in view of the mobile nature of the scanning by localization data). The proposed wireframe generation approach can operate solely within a 3D space without requiring any additional data/information such as said image data or pre-existing floor plan data etc. The algorithm can start directly with point clouds, capturing raw spatial data that's processed in real-time to define structural elements, edges, and openings purely from geometric relationships within the point cloud 2a. This independence from any additional data such as pre-existing layouts makes the proposed approach highly adaptable for diverse environments, especially for spaces with complex, unique, or unknown structures where no prior layout information is available.

The proposed workflow can generate comprehensive and accurate 2D or 3D wireframe models 4 even in challenging environments. Particularly by incorporating said techniques of handling occlusions and complex environments and structures like staircases, a reality capture system applying the method makes it highly adaptable to diverse architectural layouts, ensuring the model reflects the true structure of the scanned space.

The progressive wireframe model 4 can be built incrementally as data is captured by the scanning device. As the device scans, point cloud data and trajectory information are continuously fed into the wireframe generation pipeline. Each new segment of point cloud data is processed in real-time, identifying planes 6, edges 8, corners 9, and openings 10 based on geometric relationships. Detected elements are integrated into the wireframe on-the-fly, allowing the model 4 to expand dynamically and update with each new scan input. New elements can be continuously added to the wireframe, whereby it can be checked that they do not yet exist in the wireframe, e.g., by plane merging as exemplified above. This also allows to view both the detailed point cloud and a structural outline 4 of the environment parallel or simultaneously.

Such a step-by-step accumulation enables the wireframe model 4 to develop progressively, giving users an up-to-date representation 4 of the environment as scanning continues. An electronic display unit can receive each data update and visualize the evolving wireframe 4 so users can interact with and monitor the structural outline 4 of the scanned space in real time. This process provides a continuous/seamless, accurate spatial framework 4 that grows with the data, capturing the essential layout and structural details of the environment.

On top, an AR-based editing feature can be implemented allowing users to view and also refine the wireframe model 4 in real time, providing the ability to make on-site adjustments to structural boundaries and confirm essential features such as walls 6, edges 8 or openings 10 through interactive means. Thus, users gain flexibility to refine the wireframe 4 immediately, ensuring that critical elements 6, 8, 9, 10 are captured accurately and verified on the spot, leading to a more reliable final wireframe.

In addition, the proposed approach can enable a workflow where a wireframe 4 is refined, e.g., a processing taking a few minutes right at the end of the scan. Gathered data and already computed wireframe 4 can be reprocessed and refined, in the field, on the computing unit (e.g. a handheld device).

For example, a refinement step includes a plane refining algorithm. The planes (and therefore the edges and the corners) obtained during a previous real-time processing might not have a perfectly accurate position. For instance, consecutive merging of the planes can lead to an inaccuracy in plane position or orientation. To refine a plane at the end of the scan, the 3D position of each point belonging to the plane is retrieved. This includes points from all planes that have been previously merged to create this plane. The plane best fitting all these points is then retrieved using a RANSAC algorithm, and this new plane position and orientation is kept, updating the wireframe elements accordingly.

A wireframe 4 can also be refined from scan data away from the field/offline, e.g., on a PC, for example, if the user did not use the wireframe functionality in the field, or if more precise localization data or measurement trajectory than the one computed in real time on the field is available.

Any post-processing can enable the use of a more accurate trajectory, resulting in a higher-quality point cloud and, consequently, a more precise wireframe. This offline processing capability allows users to achieve greater accuracy in environments where real-time processing may not be required, or where detailed analysis is essential, enhancing the tool's versatility for a variety of operational scenarios.

Also, for example a 2D floor plan can be generated from a 3D wireframe model 4, providing a complementary output for applications focused on floor layout. Such an automated floor plan generation enables quick, accurate layouts for architectural, design, and facilities management purposes, providing both 2D and 3D references for various stakeholders.

Yet another potential approach involves analyzing the wireframe during generation to identify critical structural elements, such as load-bearing walls or potential weaknesses, by incorporating structural data. Such a real-time structural analysis adds a layer of safety assessment to the wireframe model **4,** valuable for renovation and structural evaluation, enabling proactive insights into structural stability and health.

A skilled person is aware of the fact that details, which are here shown and explained with respect to different embodiments, can also be combined with details from other embodiments and other permutations in the sense of the invention.

## Claims

1. Method with a reality capturing scanning device (1) designed for capturing a, particularly indoor, environment (110)
wherein the method comprises
• automatically generating 3D-point cloud data (2, 2a, 2a', 2a'') using a, in particular time-of-flight solid-state, laser scanner (101) of the scanning device (1),
• automatically determining localization data (2b, T) of the scanning device (1),
**characterized by**
automatically generating a graphically visualizable 3D-wireframe model (4) of the scanned environment (110) on-site and on-the-fly by real-time evaluating said localization data (2b, T) and point cloud data (2, 2a, 2a', 2a''), with
• automatically detecting planes (6, 6a, 6b, 6a', 6b', 6a", 6b'') represented by points from the point cloud data (2, 2a, 2a', 2a''),
• automatically detecting edges (8, 8a-c) based on a determination of intersections of detected planes (6, 6a, 6b, 6a', 6b', 6a'', 6b") and
• automatically detecting corners (9) based on a determination of intersections of detected edges (8, 8a-c).

2. The method according to claim 1,
**characterized by**
automatically orienting normals (7) of detected planes (6, 6a, 6b, 6a', 6b', 6a'', 6b'') based on the localization data (2b, T).

3. The method according to claim 1 or 2,
**characterized in that**
the scanning device (1) is embodied as a mobile scanning device (1) designed to be carried and moved, particularly by a person (100), along a movement trajectory (T) within the environment and determining localization data (2b, T) comprises determining the movement trajectory (T) using a localization unit (102) of the scanning device (1).

4. The method according to one of claims 1 to 3,
**characterized in that**
the detection of planes (6, 6a, 6b, 6a', 6b', 6a'', 6b'') is based on a region-growing approach.

5. The method according to any one of the preceding claims,
**characterized in that**
• said automatically detecting edges (8, 8a-c) based on a determination of intersections of detected planes (6, 6a, 6b, 6a', 6b', 6a'', 6b'') comprises a detection of hidden edges by extrapolation of detected planes (6a'', 6b''), and/or
• detected corners (9) are automatically used as vertices of the wireframe model (4).

6. The method according to any one of the preceding claims,
**characterized by**
automatically refining the wireframe model (4) on-the-fly by
• merging subsequently detected planes (6, 6a, 6b, 6a', 6b', 6a'', 6b'') according to overlap, distance and angle thresholds in the course of the wireframe model generation and/or
• discarding detected planes (6, 6a, 6b, 6a', 6b', 6a", 6b'') below a minimum plane size threshold and/or minimum number of plane points threshold.

7. The method according to claim 6,
**characterized by**
automatically refining detected edges (8, 8a-c) and/or corners (9) when merging and/or discarding detected planes (6, 6a, 6b, 6a', 6b', 6a'', 6b'').

8. The method according to any one of the preceding claims,
**characterized by**
automatically verifying detected edges (8, 8a-c) by evaluation of an orientation of normals (7) and/or of scan point densities of underlying detected planes (6, 6a, 6b, 6a', 6b', 6a", 6b'').

9. The method according to any one of the preceding claims,
**characterized by**
automatically detecting a global orientation of the environment (110) by clustering normals (7) of detected planes (6, 6a, 6b, 6a', 6b', 6a'', 6b'') into three orthonormal groups.

10. The method according to any one of the preceding claims,
**characterized by**
automatically detecting openings (10) of detected planes (6, 6a, 6b, 6a', 6b', 6a'', 6b'') -if present-based on a scan point density map (11, 11'), wherein for determining a boundary of an opening (10)
• a scan point density threshold is considered and/or
• predefined geometric shapes (12) are fitted.

11. The method according to any one of the preceding claims,
**characterized by**
automatically searching for staircases wherein
• a potential staircase location is determined based on the localization data (2b, T),
• point cloud data (2, 2a, 2a', 2a'') of the potential staircase location is aggregated,
• a staircase wireframe is generated by evaluation of the aggregated point cloud data (2, 2a, 2a', 2a'') using predefined staircase geometric features specific to staircases, particularly comprising detection of sequential planes (6, 6a, 6b, 6a', 6b', 6a'', 6b'') with gradual elevation changes.

12. The method according to any one of the preceding claims,
**characterized in that**
the scanning device (1) comprises a camera unit (103) having multiple distributed localization cameras and/or a panoramic camera, and
the method comprises
• capturing images of the environment (110),
• classifying of imaged objects (111-113) and/or regions, and
• using the classification results for said detection of planes (6, 6a, 6b, 6a', 6b', 6a'', 6b''), edges (8, 8a-c) and/or corners (9).

13. The method according to claim 3 or any claim depending on claim 3,
**characterized by**
• automatically determining the movement trajectory (T) with six degrees of freedom and/or
• automatically setting a data acquisition mode for generating the point cloud data (2, 2a, 2a', 2a'') as a function of a movement parameter of the mobile scanning device (1), the movement parameter being determined using the localization data (2b, T).

14. The method according to any one of the preceding claims,
**characterized by**
automatically identifying and visually marking critical structural elements based on
• stored environmental data, in particular a Building Information Model, and/or
• machine learned classification of image data of the environment (110) captured during the measuring process.

15. A computer program product, having computer-executable instructions for performing the automatic execution of the automatic steps of the method according to claim 1, in particular when executed on a control and evaluation computer of a reality capturing system comprising a scanning device (1) according to claim 1.
